# EUROPEAN PATENT SPECIFICATION

(11) **EP 2 813 321 B1**
(45) Date of publication and mention of the grant of the patent: **06.04.2016**
(21) Application number: 13171895.9
(22) Date of filing: 13.06.2013
(51) Int. Cl.: B25B 13/04, B25B 13/08

(54) **Hand tool having an electronic identification device**
Handwerkzeug mit elektronischer Identifizierungsvorrichtung
Outil à main ayant un dispositif d'identification électronique

(43) Date of publication of application: 17.12.2014
(73) Proprietor: Stanley Works (Europe) GmbH, 8600 Dübendorf (CH)
(72) Inventor: Lehovetzki, Axel, 93260 Les Lilas (FR)
(74) Representative: Kavanagh, Benjamin

(56) References cited:
- DE-A1-102008 013 588
- DE-A1-102008 031 372
- DE-U1- 20 218 542
- GB-A- 2 462 858
- US-A1- 2004 255 724
- US-A1- 2004 261 585
- US-A1- 2011 192 259
- US-B1- 6 182 538

## Description

A Radio Frequency Identification (RFID) tag is a type of electronic identification device that may be used to identify and track various objects. In practice, an RFID tag is attached to an object, and an RFID reader senses the presence and identifying information associated with the RFID tag. The RFID reader may be located at an entrance or exit of an environment, thus facilitating the tracking and identifying of objects having RFID tags that enter or exit the environment.

RFID tags may be added to existing objects so that they may be tracked. To this end, an RFID tag may be mounted to the exterior of an object using adhesives or shrink wrap. However, by being mounted to the exterior of an object, the RFID tag may impede the intended functionality of the object.

It is an object of the present invention to provide RFID-enabled tools with improved features.

In an aspect of the present invention, there is provided a hand tool comprising an elongate body, a nut turning means at a first end of the body, and a top cap and a bottom cap disposed on opposite sides of the body, wherein the top cap and the bottom cap are secured to the body by an interconnection between the top cap and the bottom cap which traverses at least one hole formed through the body and wherein the top cap, the bottom cap and the body combine to form a gripping portion suitable for use as a handle, wherein the interconnection comprises at least one pair of dowels, wherein one of each pair of dowels protrudes from the top cap to engage the other of each pair of dowels which protrudes from the bottom cap, and wherein the or each pair of dowels traverses a respective hole through the body, wherein the hand tool comprises an electronic identification device, wherein the electronic identification device is encapsulated in a cavity defined by the body and at least the top cap, wherein at least the top cap comprises a material which is at least partially-transparent to radio frequency energy in order to facilitate transmission of signals to and from the electronic identification device, wherein the interconnection comprises a multitude of pairs of dowels and wherein different widths between adjacent pairs of dowels preclude rotational symmetry of the top cap and the bottom cap about their midpoint. Handles are generally elongate to fit the grip of a hand. Manipulation of a handle may be adjusted to suit an operator's grip according to the handle's shape. Advantageously, the caps may be accommodated within a gripping portion so that the electronic identification device is sequestrated without affecting the functionality of the hand tool. The difference in widths between adjacent pairs of dowels ensures that the holes and the dowels do not align unless the top cap and the bottom cap are orientated correctly in relation to the elongate body.

Preferably, the body comprises a first elongate outer strip, a second elongate outer strip and a middle strip, wherein the first outer strip and the second outer strip extend along the outer edges of the body between the first end and the second end of the tool, wherein the middle strip is disposed between the first and second outer strips, wherein the middle strip is recessed in relation to the first and second outer strips such that a height of the middle strip is less than a height of the first and

second outer strips and wherein a top cap and a bottom cap disposed on opposite sides of the middle strip. The elongate body may have a generally flat cross-section with or without rounded edges or it may have a generally elliptical cross-section or it may have a combination of these shapes. Such shapes are ergonomic for handling and may be sandwiched between the caps attached to opposing broader sides. The body consists of enough material to support a hole or holes formed through or near the middle of the body.

Preferably, engagement between the or each pair of dowels is provided by a snap fit or an interference fit.

Preferably, engagement between the or each pair of dowels is provided by a male joint disposed on one of each dowel pair and a female joint disposed on the other of each dowel pair.

Preferably, the or each pair of dowels are glued together.

Preferably, the exterior of each of the top cap and the bottom cap is rounded. This improves the ergonomics of the gripping portion.

Preferably, the electronic identification device is secured to the body.

Preferably, electronic identification device is held securely within the cavity by an internal damping web or a layer of flexible cellular or elastomeric material abutting against the electronic identification tag.

Preferably, the bottom cap comprises the same material as the top cap.

Preferably, the material of the top cap and/or the bottom cap comprise a fluorescent pigment.

Preferably, the nut turning means comprises a ring socket, an open socket, an adjustable socket, a ratcheted ring socket or a wrench drive spindle.

Preferably, the hand tool comprises a second nut turning means at a second end of the body opposite to the first end of the body.

Preferably, the second nut turning means comprises a ring socket, an open socket, an adjustable socket or a ratcheted ring socket.

Further features and advantages of the present invention will be understood by reference to the following description, which is given by way of example and in association with the accompanying drawings of which:
Figures 1A-1C are drawings of an adapter according to various embodiments of the present disclosure;
Figures 2A-2C are drawings of an adapter body of the adapter of Figures 1A-1C;
Figures 3A-3C are drawings of an adapter cover of the adapter of Figures 1A-1C;
Figure 4 is a drawing of the adapter of Figures 1A-1C attached to an inventory item according to various embodiments of the present disclosure;
Figures 5A-5C are drawings of a hand tool, with a handle and a shaft;
Figure 6A shows a top view of a hand tool with a flat handle;
Figure 6B shows a side view of the hand tool of Figure 6A;
Figure 6C shows a top view of a top cap of the hand tool of Figures 6A and 6B;
Figure 6D shows a cross-sectional view C-C of the top cap of Figure 6C;
Figure 6E shows a bottom view of a bottom cap of the hand tool of Figures 6A and 6B;
Figure 6F shows a cross-sectional view E-E of the bottom cap of Figure 6E;
Figure 6G shows detail A of the hand tool of Figures 6A and 6B;
Figure 7 shows a cross-sectional view of a hex key coated with PVC; and
Figure 8 shows the hex key of Figure 7 with a pocket of the PVC coating lifted up;
Figure 9 shows a cross-sectional view of a hand wrench coated with PVC.

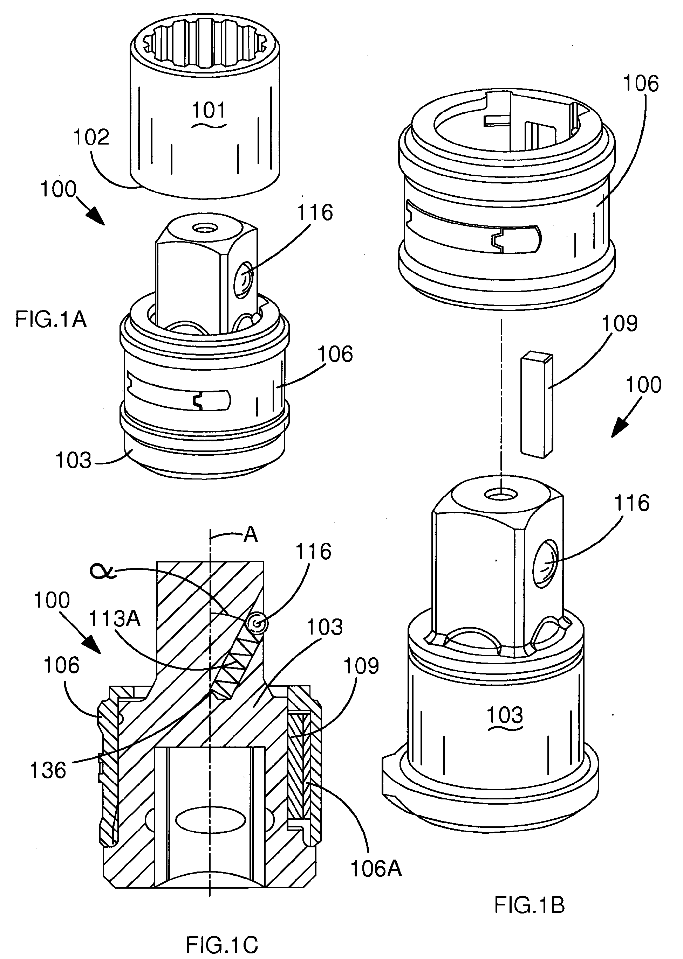

In an aspect of the present invention, Figures 1A - 4 show an adapter for an inventory item having an electronic identification device. Existing inventory items, such as but not limited to, socket tools, air tool fittings, driver bits (e.g., Phillips bits, flathead bits, hex-head bits, TORX® bits, APEX® bits, *etc.)* alien wrenches, hoses, welding equipment, medical equipment, or any inventory item having a universal attachment fitting, may be retrofitted to become RFID-enabled while maintaining the intended functionality of the inventory items. In general, the present disclosure is directed towards permanently attaching an adapter equipped with an electronic identification device to an inventory item. As used herein, the term "permanently attached" refers to an attachment that is not intended to be removed, unless defeated by component failure, unauthorized removal, or other types of unintended activity. As a non-limiting example, one end of an adapter equipped with an RFID tag is configured to permanently attach to one or more inventory items, such as a socket, a conventional socket adapter, a crowfoot wrench, *etc*., while the other end of the adapter is configured to removably attach to a socket driver. As such, the adapter, RFID tag, and socket may be a substantially unitary piece. By being configured to permanently attach to a universal attachment fitting, one adapter style may be produced that is capable of permanently attaching to multiple sizes and styles of sockets.

With the RFID enabled adapter permanently attached to a socket or other type of inventory item, an RFID reader may identify or track the inventory item by sensing signals emitted from the RFID tag. For example, an RFID tag reader may be installed at an entrance or exit of an environment, and the activity associated with the inventory item may be monitored. This monitoring may be especially useful, for example, in operating rooms where it is extremely important to track medical tools, in mechanical environments where a lost tool may cause damage to equipment, in an environment where inventory item theft may be a concern, or in other environments.

In addition and complementary to the monitoring capabilities provided by electronic identification devices, fluorescent pigments are also useful in facilitating tracking or items and retrieval of misplaced items in an environment. For example, when applied to a tool or adapter, or added to a PVC coating, the fluorescent pigment can enable easy identification by sight.

In the following discussion, a general description of the apparatus and its components are provided, followed by a discussion of the operation of the same.

With reference to Figures 1A-1C, shown is an adapter 100 according to an embodiment of the present disclosure. The adapter 100 shown in Figures 1A-1C is configured to become a substantially unitary piece with the inventory item 101. The inventory item 101 has a female fitting 102 facilitating attachment between the adapter 100 and inventory item 101. As may be appreciated, the female fitting 102 is common to other related inventory items 101 so that a common tool (*e.g*., a socket driver) may be attached to several inventory items 101. In this sense, the female fitting 102 may be considered one example, among others, of a universal attachment fitting. Additionally, a universal attachment fitting in various embodiments may be, for example but not limited to, male fittings, threaded joints, quick-release couplings, or any other universal attachment fitting being a deliberate mechanical point of connection for the inventory item 101.

In the embodiment shown, the inventory item 101 is embodied in the form of a socket. It is understood that in alternative embodiments, the inventory items 101 may be, for example but not limited to, socket tools, air tool fittings, driver bits (*e.g*., Phillips bits, flathead bits, hex-head bits, TORX® bits, APEX® bits, *etc*.) alien wrenches, hoses, welding equipment, medical equipment, or any inventory item having a universal attachment fitting. The adapter 100 may also be preconfigured to be attached to another inventory item 101 or tool such as, for example, a preexisting fitting of a powered or manual driver tool (not shown).

The adapter 100 includes an adapter body 103, an adapter cover 106, an electronic identification device in the form of an RFID tag 109, a biasing member in the form of a spring 113, and a detent or retaining element 116. The adapter cover 106 surrounds a portion of the adapter body 103 and helps to secure the RFID tag 109 to the adapter body 103. The adapter cover 106 is transparent or partially-transparent to radio frequency energy to facilitate the RFID tag 109 transmitting and/or receiving signals.

The retaining element 116 is disposed at least partially within the adapter body 103 and facilitates retaining the adapter 100 to an inventory item 101, as will be described later. As will be described later, the spring 113 biases the retaining element 116 to protrude a small way from the adapter body 103 to facilitate permanent attachment of the adapter 100 to the inventory item 101.

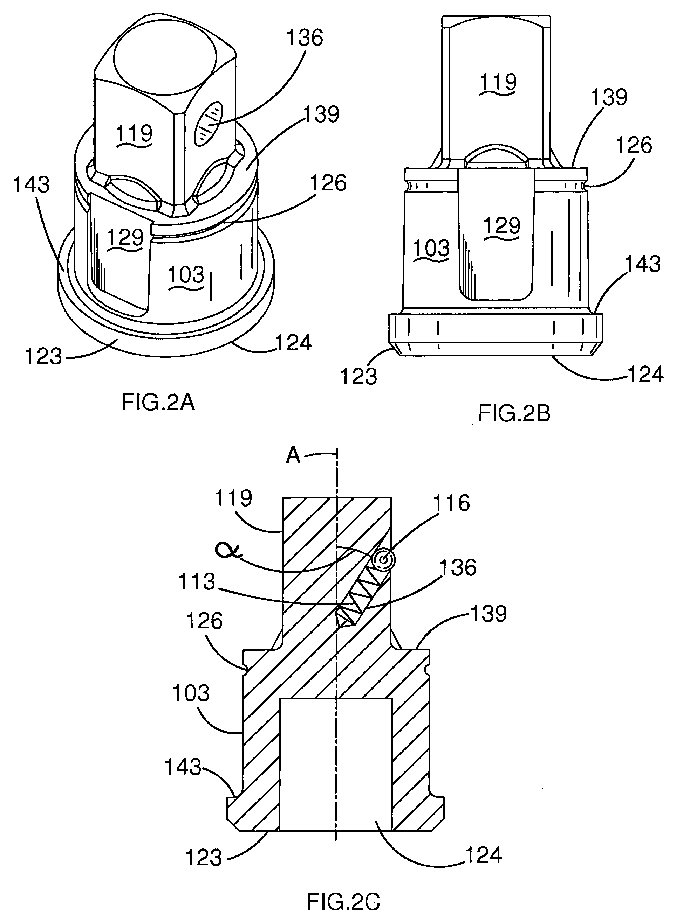

Turning to Figures 2A-2C, there is shown is the adapter body 103 which includes a first, male end 119, configured to be received in a female fitting 102 (Figure 1A) of the inventory item 101 (Figure 1A). Opposite of the first, male end 119 is a second, female end 123 and a female recess 124 configured to receive, for example, a socket driver.

As will be described below, in the embodiment shown, the first, male end 119 is configured to permanently attach to the inventory item 101, while the second, female end 123 is preconfigured to attach to, for example, a male end of a socket driver tool or another type of powered or manual tool (not shown). It is understood that although the embodiment shown has a male end 119 and a female end 123, both the first and second ends may be male or both ends may be female in alternative embodiments.

Although shown in Figures 2A-2C as being formed of a single unit, the adapter body 103 may instead comprise multiple components that are assembled to form the adapter body 103. For example, the male end 119 may be detached from the remainder of the adapter body 103. In such a case, during assembly, the male end 119 may be attached to the remainder of the adapter body 103 by a weld or other permanent attachment methods.

The adapter body 103 includes a groove 126, a recess 129, a bore 136, an edge 139 and a rim 143. The groove 126 extends at least partially circumferentially around the adapter body 103. The recess 129 is a depressed region of the adapter body 103 and takes a shape that is slightly larger than the RFID tag 109 or a holder of the RFID tag 109.

The bore 136 is a blind bore which is inclined at an angle α in relation to a longitudinal central axis A of the adapter body 103. Angle α = 35 degrees +/- 1 degrees. The bore 136 extends from an open mouth end at an outer surface of the male end 119 towards the central axis A and the female end 123 where it terminates at a closed end. The bore 136 is configured to receive the biasing member in the form of a compression spring 113. The bore is configured to slidingly receive the retaining element 116. The spring 113 biases the retaining element 116 towards the open mouth end at the outer surface of the male end 119. The depth of the bore is approximately 5mm along its central axis of elongation.

The edge 139 is a surface configured to be adjacent to the inventory item 101. The rim 143 is disposed along the adapter body 103 towards the female end 123. Both the edge 139 and rim 143 facilitate attaching and retaining the adapter cover 106 to the adapter body 103 as will be described later.

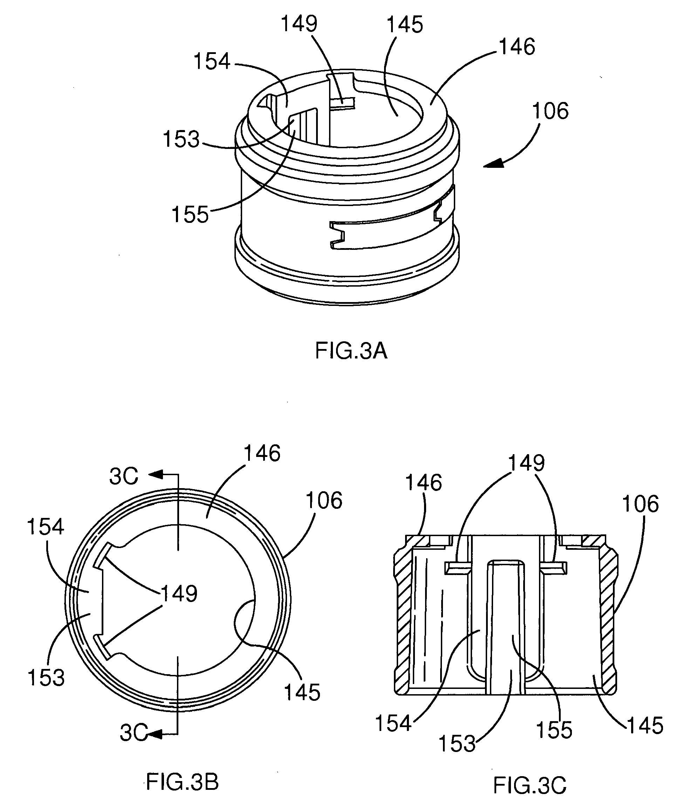

With reference now to Figures 3A-3C, there is shown is an example of an adapter cover 106 according to an embodiment of the present invention. The adapter cover 106 shown in Figures 3A-3C is embodied in the form of a collar that surrounds a portion of the adapter body 103. The adapter cover 106 acts as a covering to protect and/or permanently secure the RFID tag 109 to the adapter body 103. In alternative embodiments, the adapter cover 106 may partially cover a portion of the adapter body 103, instead of completely surrounding the circumference of the adapter body 103.

The adapter cover 106 includes an interior surface 145 extending through the adapter cover 106 for at least a portion of the adapter body 103 to pass through the adapter cover 106. The adapter cover 106 may be constructed of nylon or other plastic-type materials to facilitate transmission of signals to and from the RFID tag 109. However, it is understood that the adapter cover 106 may be constructed of other materials that are transparent to radio frequency energy. The material of the adapter cover 106 may have a fluorescent pigment. This facilitates tracking the adapter 100 and inventory item 101 by sight, especially with the help of a flashlight which emits ultra-violet light. This may be beneficial when tracking a misplaced inventory item in a complex environment with multiple parts, such as in an aero-engine or a railway locomotive. The preferred colour is yellow + fluorescent pigment.

The adapter cover 106 also includes a lip 146, one or more detents 149, a receptacle 153, and possibly other features not discussed in detail herein. The lip 146 extends from an interior surface at an end of the adapter cover 106. Although shown in Figures 3A-3C as extending from most of the circumference of the adapter cover 106, the lip 146 may instead extend from only a portion of an end of the adapter cover 106. Additionally, in alternative embodiments, the adapter cover 106 may include multiple lips 146 located at one or both ends of the adapter cover 106.

The one or more detents 149 are disposed on the interior surface 145 of the adapter cover 106. Although shown in Figures 3A-3C as being located adjacent to the receptacle 153, the one or more detents 149 are located opposite of the receptacle 153, causing the RFID receptacle to be snug against the adapter body 103. Further, it is understood that the one or more detents 149 or other types of restrictions may be disposed anywhere along the interior surface 145 of the adapter cover 106. As will be described below, the detents 149 aid in aligning the adapter cover 106 with the adapter body 103 during assembly of the adapter 100. Further, the detents 149 facilitate attachment of the adapter cover 106 to the adapter body 103 during assembly of the adapter 100.

The receptacle 153 includes a frame 154 extending from the interior surface 145 of the adapter cover 106 and a pocket 155 configured to receive the RFID tag 109. The receptacle 153 may aid in aligning the adapter cover 106 with the adapter body 103 during assembly of the adapter 100. Further, the receptacle 153 may provide cushioning or protection for the RFID tag 109. For example, the adapter cover 106 may have an internal damping web 106a compressed against the RFID tag 109 to help hold the latter more securely. Alternatively, the damping web may be replaced by a layer of flexible cellular or elastomeric material 106a.

Referring back to Figures 1A-1C, the RFID tag 109 is a type of electronic identification device that emits an identifying signal that is capable of being received by an appropriate RFID reader. The identifying signal may include data that uniquely corresponds to the RFID tag 109, thereby facilitating the identification of an object to which the RFID tag 109 is attached. The RFID tag 109 may be active, semi-active, or passive and may or may not include storage memory. In alternative embodiments, the functionality of the RFID tag 109 may be replaced with other types of electronic identification devices capable of emitting an identifying signal and being receivable by an appropriate receiving device.

The retaining element 116 facilitates permanently attaching the adapter 100 to the female fitting 102 of the inventory item 101. In the embodiment shown, the retaining element 116 is embodied in the form of a metal spherical ball. Additionally, it is noted that one or more retaining elements 116 each with a respective bore 136 may be used.

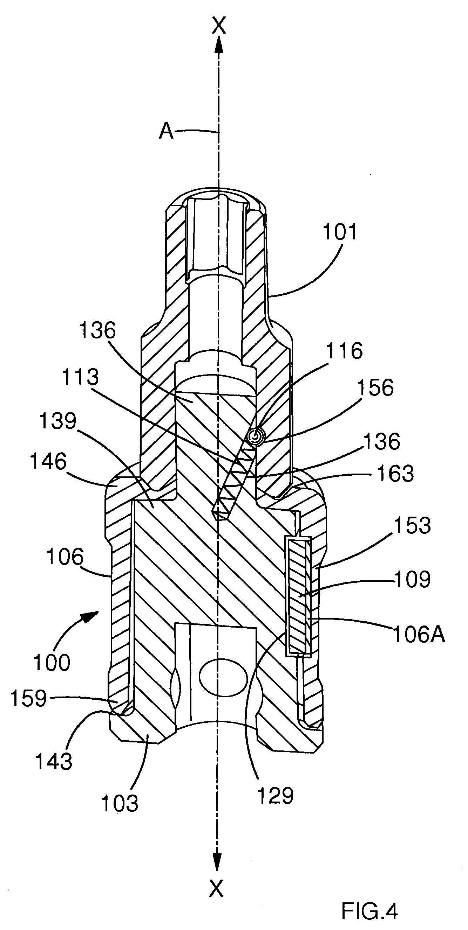

The retaining element 116 is configured to be retained, at least partially, in the bore 136 of the adapter body 103. Additionally, the retaining element 116 is configured to be retained in a complementary receiving recess 156 (Figure 4) of the inventory item 101. The receiving recess 156 is a recess in an internal face of the inventory item 101. The retaining member 116 is shaped to be at least partially nested within the receiving recess 156. As will be discussed, the retaining element 116 is configured to move from a retracted position, with the retaining element 116 at least partially within the adapter body 103, to a locking position, with the retaining element 116 disposed at least partially in the receiving recess 156 of the inventory item 101. As mentioned above, the spring 113 biases the retaining element 116 from the retracted position to the locking position.

Next, a description of the operation of the various components of one example, among others, of the adapter 100 is provided. Turning to Figure 4, shown is the adapter 100 and its interaction with an inventory item 101 according to various embodiments. The adapter 100 is permanently attached to the inventory item 101.

In order to assemble the adapter 100, the RFID tag 109 is placed in the receptacle 153 of the adapter cover 106, and the adapter cover 106 is slid over the adapter body 103. The detents 149 (Figure 3A-3C) and lip 146 of the adapter cover 106 facilitate proper alignment of the adapter cover 106 with respect to the adapter body 103. To this end, the detents 149 of the adapter cover 106 align with and/or snap into the groove 126 (Figures 2A-2C) of the adapter body 103, thereby indicating proper alignment and facilitating attachment of the adapter cover 106 to the adapter body 103. Similarly, the lip 146 of the adapter cover 106 abuts the edge 139 of the adapter body 103, and an end 159 of the adapter cover 106 abuts the rim 143 of the adapter body 103. Thus, the adapter cover 106 may be properly aligned in a longitudinal direction during assembly of the adapter 100.

In a similar fashion, the recess 129 of the adapter body 103 and receptacle 153 of the adapter cover 106 facilitate proper rotational alignment of the adapter body 103 with respect to the adapter cover 106. Because the recess 129 is configured to accommodate the shape of the receptacle 153, proper rotational alignment during assembly is apparent during assembly. Additionally, the adapter cover 106 is prevented from rotating after assembly.

The retaining element 116 is in the bore 136 of the adapter body 103, and the inventory item 101 is placed on the appropriate end of the adapter body 103. The lip 146 of the adapter cover 106 may compress between the edge 139 of the adapter body 103 and an end 163 of the inventory item 101. When the inventory item 101 is permanently attached to the adapter 100, such compression between the edge 139 of the adapter body 103 and the end 163 of the inventory item 101 facilitates the adapter cover 106 being permanently attached to the adapter body 103.

The spring 113 biases the retaining element 116 to extend from the retracted position to the locking position where the retaining element 116 received in the receiving recess 156 of the inventory item 101. The inventory item 101 cannot be pulled apart from the adapter body 103 in the direction of double-headed arrow X because, due to the inclination of the bore 136 a side of which acts as a wedge, pulling in this direction tends to wedge the retaining element 116 against the receiving recess 156 and, in doing so, reinforce engagement between the retaining element 116 and the receiving recess 156. Once the retaining element 116 is engaged with the receiving recess 156, the adapter 100 is permanently attached to the inventory item 101.

It may be beneficial to apply glue at the interface between the adapter 100 and the inventory item 101 to eliminate any rattle that may exist between the components. This helps to reassure an operator that the adapter 100 and the inventory item 101 are permanently attached.

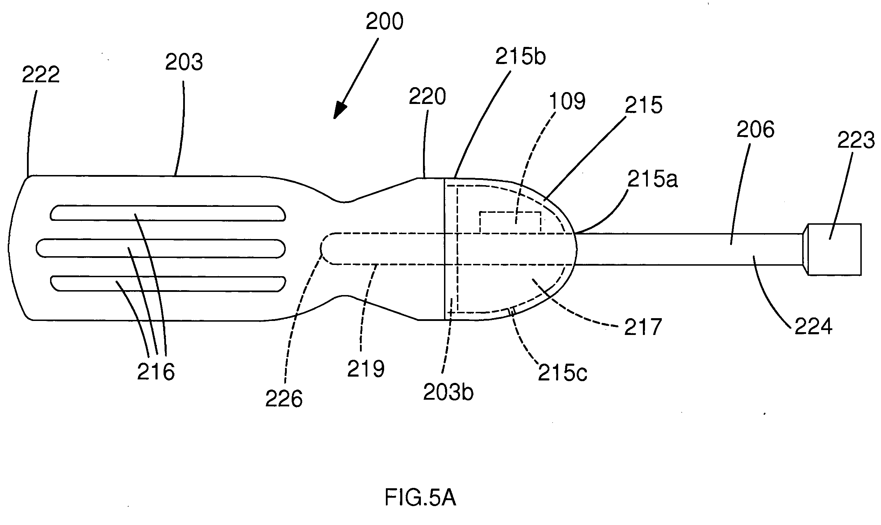

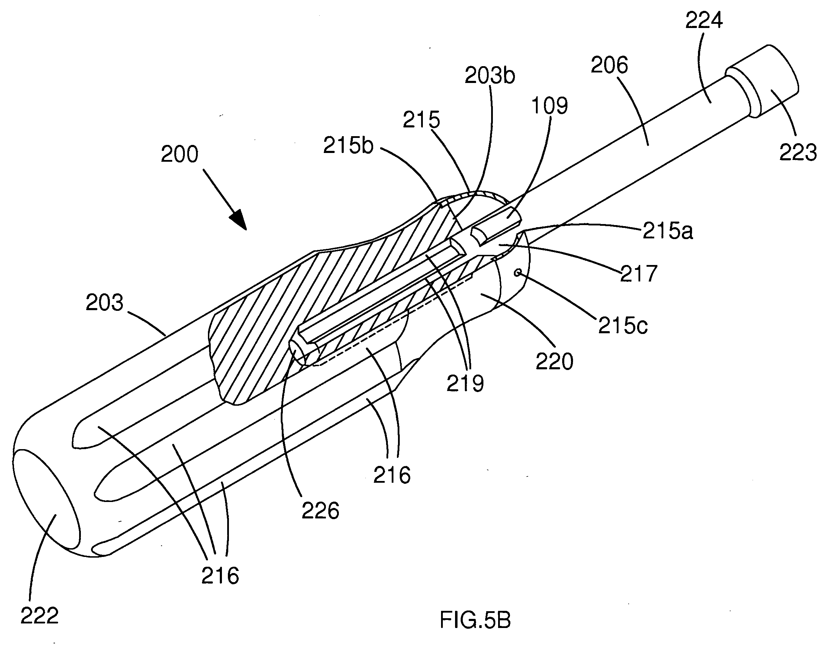

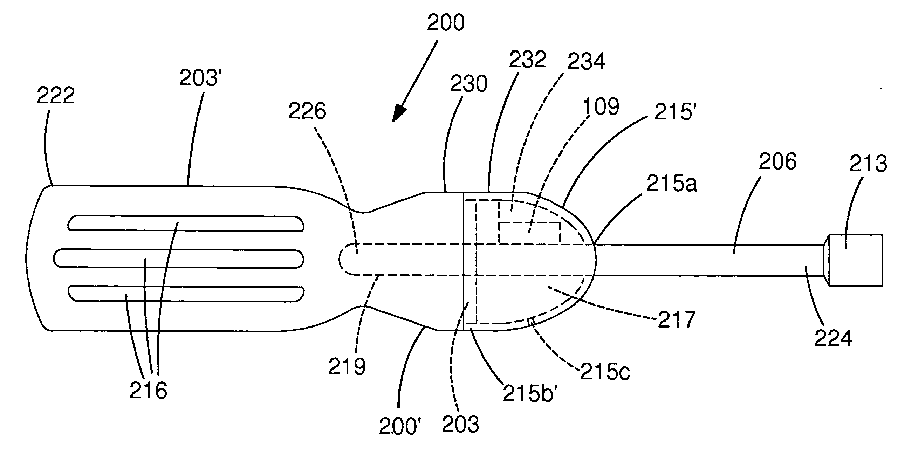

In a further aspect of the present invention, Figures 5A-5B show a hand tool having an electronic identification device. The hand tool includes a cap with a cavity configured to encapsulate an RFID tag. The cap provides a seal with respect to the cavity, thereby protecting the RFID tag from being exposed to corrosive chemicals. Additionally, by the RFID tag being in the interior of the cap, the RFID tag may be shielded or cushioned from impacts. Even further, by being placed in the interior of the cap, the RFID tag may not interfere with the intended functionality or appearance of the hand tool. In the following discussion, a general description of the system and its components is provided, followed by a discussion of the operation of the same.

With reference to Figures 5A-5B, shown is a hand tool 200 according to various embodiments of the present disclosure. The hand tool 200 includes a handle 203 having a front portion 220 and a back portion 222, a shaft 206 having a first working end 224 and a second connection end 226, an electronic identification device 109, and a generally hemi-spherical cap 215. The hand tool 200 shown is embodied in the form of a nut-driver. However, the hand tool 200 may be embodied in the form of, for example but not limited to, a screwdriver, a bit driver, a hammer, a mallet, a wrench, a cutting tool (e.g., scissors, a knife, *etc.),* a file, a scraper, a spatula, a chisel, a chisel holder, an awl, a punch, a brush, a broom, an axe, a pry bar, an extension mirror, an extension magnet, a level, or any other type of hand tool 200.

The handle 203 is a portion of the hand tool 200 that is configured to be gripped by a user, as may be appreciated. For example, in the case in which the hand tool 200 is a nutdriver, the handle 203 is the portion of the nutdriver that a user grips and rotates in order to tighten or loosen a fastener (not shown). The handle 203 includes multiple grooves 216 to facilitate a grip by a user. The handle 203 comprises a nylon or other plastic-type material that is transparent or partially-transparent to radio frequency energy, in order to facilitate the transmission of signals to or from the electronic identification device 109.

The shaft 206 is made of metal. The shaft 206 is attached to and extends from the handle 203. The connection end 226 of the shaft 206 is moulded into the handle 203 at the front portion 220 of the handle. To secure the shaft 206 to the handle, and to prevent rotation of the shaft 206 with respect to the handle 203, the connection end 226 of the shaft 206 that is disposed in the handle 203 includes multiple outwardly extending fins 219.

At the working end 224 of the shaft 206 is a driver 223. The driver 223 may be configured to receive and rotate fasteners (such as but not limited to, screws, bolts, nuts, *etc*.), bits (*e.g.* Phillips bits, flathead bits, hex-head bits), or other items.

The RFID tag 109 is of the type which is designed to contact a metal object. The RFID tag 109 is secured to the shaft 206 at a location near the handle 203. The RFID tag 109 may be secured by any suitable means, such as adhesive or shrink wrap. The RFID tag 109 emits an identifying signal that is capable of being received by an appropriate reader (not shown). The identifying signal may include data that uniquely corresponds to the RFID tag 109, thereby facilitating the identification of the hand tool 200 to which the electronic identification device 109 is attached. The RFID tag 109 may be active, semi-active, or passive and may or may not include storage memory. In various embodiments, the electronic identification device 109 may be embodied in the form of an RFID tag or another type of electronic identification device 109 capable of emitting an identifying signal. Advantageously, contact with the metal shaft 206 has the effect of amplifying emission, and reception, of the signal to, and from, the RFID tag 109. The amount of amplification is proportional to the size of the metal object to which the RFID tag 109 is connected.

The cap 215 is a generally hemi-spherical shell. The cap 215 has a central hole 215a surrounding the shaft 206 and a circular base 215b which has approximately the same outer diameter as the front portion 220 of the handle 203 against which it abuts. The front portion 220 of the handle has a crown 203b of reduced diameter which protrudes a small way inside the base 215b of the cap 215. Friction between the central hole 215a of the cap 215 and the shaft 206 and/or an interference fit between the base 215b of the cap 215 and the crown 203b secures the cap 215 on the hand tool 200. A snap-fit between the base 215b of the cap 215 and the crown 203b may alternatively be used to secure the cap 215 on the hand tool 200. For additional security, the base 215a of the cap 215 may be glued to the crown 203b. The cap 215 and the front portion 220 of the handle 203 combine to form a cavity 217 which encapsulates the RFID tag 109. The cap 215 has a small hole 215c in one side through which glue may be injected to fill the cavity 217 and to secure the cap 215 and RFID tag 109 permanently on the hand tool 200. If the injection of glue into the cavity provides a sufficient adhesion between the cap and the handle, it may not be necessary to glue the base 215a of the cap 215 to the crown 203b beforehand.

In order to facilitate transmission of signals to and from the RFID tag 109, the cap 215 and any glue comprises material that is transparent or partially-transparent to radio frequency energy. The cap 215 and the RFID tag 109 may be fitted to a new hand tool 200, or retro-fitted to a preexisting hand tool 200. The front portion 220 of the handle 203 may alternatively have a non-circular external profile, and the base 215b of the cap 215 may have a corresponding non-circular internal profile. For example, as shown in Figure 5C, the circumference of the front portion 220' of the handle 203' may have a short flat side 230 corresponding to a short flat side 232 in the circumference of the otherwise circular base 215b' of the cap 215'. This is to ensure that the handle 203' and the cap 215' are correctly aligned during assembly. This is because part of the interior of the cap 215' may be equipped with elastomeric material 234, such as foam, which should be located over the RFID tag 109 to protect it from impact.

The material of the handle 203 and/or the cap 215 may be fluorescent. The preferred colour is yellow + fluorescent pigment. This facilitates tracking the hand tool 200 by sight, especially with the help of a flashlight which emits ultra-violet light. This may be beneficial when tracking a misplaced hand tool in a complex environment with multiple parts, such as in an aero-engine or a railway locomotive.

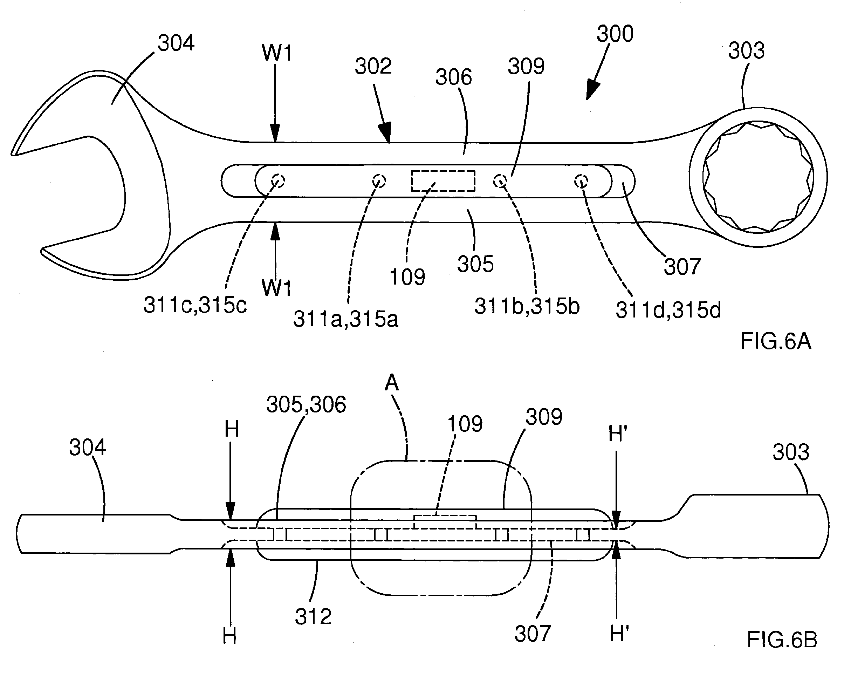

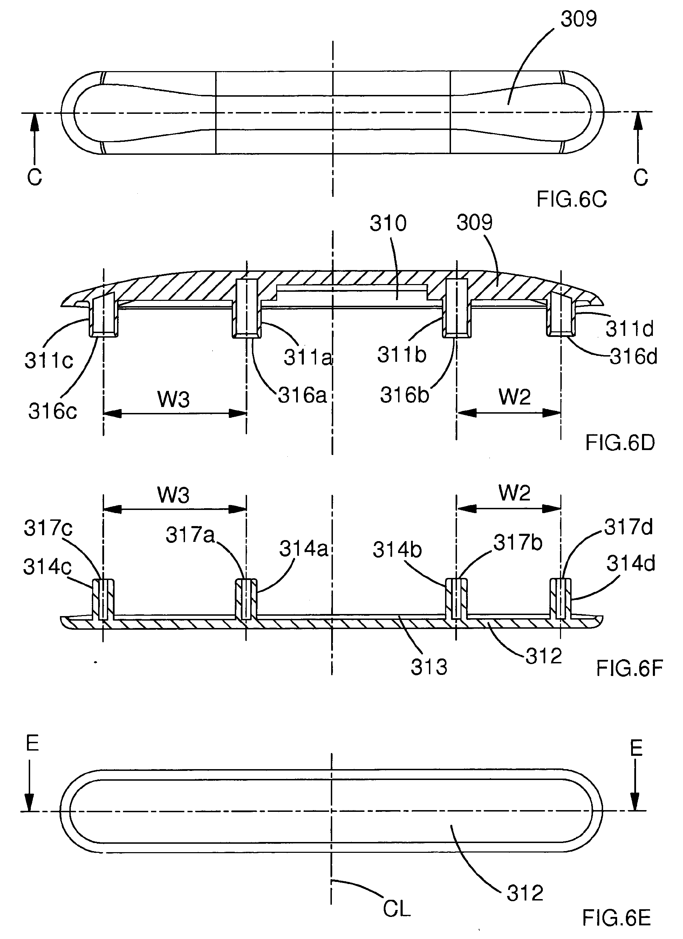

In a further aspect of the present invention, Figures 6A to 6G show a hand tool with a flat handle having an electronic identification device such as an RFID tag. The hand tool includes a pair of caps which form at least one cavity configured to encapsulate an RFID tag. The caps provide a seal with respect to the cavity, thereby protecting the RFID tag from being exposed to corrosive chemicals. Additionally, by the RFID tag being in the interior of the cap and the handle, the RFID tag is shielded or cushioned from impacts. Even further, by being placed in the interior of the caps, the RFID tag does not interfere with the intended functionality of the hand tool. In the following discussion, a general description of the system and its components is provided, followed by a discussion of the operation of the same.

Referring to Figures 6A to 6B, there is shown a hand tool in the form of hand wrench 200 with an elongate generally flat body 302 made of metal. The hand tool shown is a hand wrench, but it may be another tool with a flat metal handle such as a ratchet wrench, a socket wrench, a torque wrench or an adjustable wrench, for example.

The hand wrench 300 comprises a ring socket 303 at a first end and an open socket 304 at a second end opposite to the first end. The body 302 has a width W1 in a plane containing the ring socket 303 and the open socket 305. The maximum height H of the body 302 is measured in a direction perpendicular to the plane containing the ring socket 303 and the open socket 305. The width W1 is approximately two or three times greater than the height H. The body 302 acts as the flat handle of the hand wrench 300 which is grasped and manipulated by an operator when tightening or loosening a nut or a bolt.

The body 302 comprises a first outer strip 305, and a second outer strip 306, the outer strips 305, 306 extending along each outer edge of the body 302, and an elongate middle strip 307 between the outer edges and between the sockets 303, 304. The middle strip 307 is recessed within the body 302 such that the height H' of the middle strip 307, is approximately half the height H of the outer strips 305, 306. In use, when a nut or a bolt is being loosened or tightened, the middle strip 307 is largely mechanically neutral because most of the torque is transmitted to the sockets 303, 304 via the outer strips 305, 306.

The hand wrench 300 comprises an electronic identification device 109 in the form of an RFID tag or another type of electronic identification device 109 capable of emitting an identifying signal. The hand wrench comprises a top cap 309 and a bottom cap 312 to protect the RFID tag 109. The caps 309, 312 comprise a nylon or other plastic-type material that is transparent or partially-transparent to radio frequency energy, in order to facilitate the transmission of signals to or from the electronic identification device 109. The RFID tag 109 is of the type which is designed to contact a metal object. The RFID tag 109 is secured to the body 302 at the middle strip 307 approximately midway between the ring socket 303 and the open socket 304. The RFID tag 109 may be secured by any suitable means, such as adhesive. The RFID tag 109 emits an identifying signal that is capable of being received by an appropriate reader (not shown). The identifying signal may include data that uniquely corresponds to the RFID tag 109, thereby facilitating the identification of the hand tool 300 to which the RFID tag 109 is attached. The RFID tag 109 may be active, semi-active, or passive and may or may not include storage memory. Advantageously, contact with the metal body 302 has the effect of amplifying emission, and reception, of the signal to, and from, the RFID tag 109. The amount of amplification is proportional to the size of the metal shaft which acts as an antenna.

The top cap 309 and the bottom cap 312 are each a generally elongate lozenge shell shaped to fit within the confines of the middle strip 307. The top and bottom caps are attached to opposite sides of the middle strip 307. The top cap 309 is a shell which forms a top cavity 310 between the top cap 309 and the middle strip 307. Unlike the top cap 309, the bottom cap 312 is generally flat. Whilst there may be a small gap 313 between the bottom cap 312 and the middle strip 307, the gap 313 is a lot smaller than the top cavity 310. The bottom cap 312 may be flush against the middle strip 307 in which case the gap 313 may not exist.

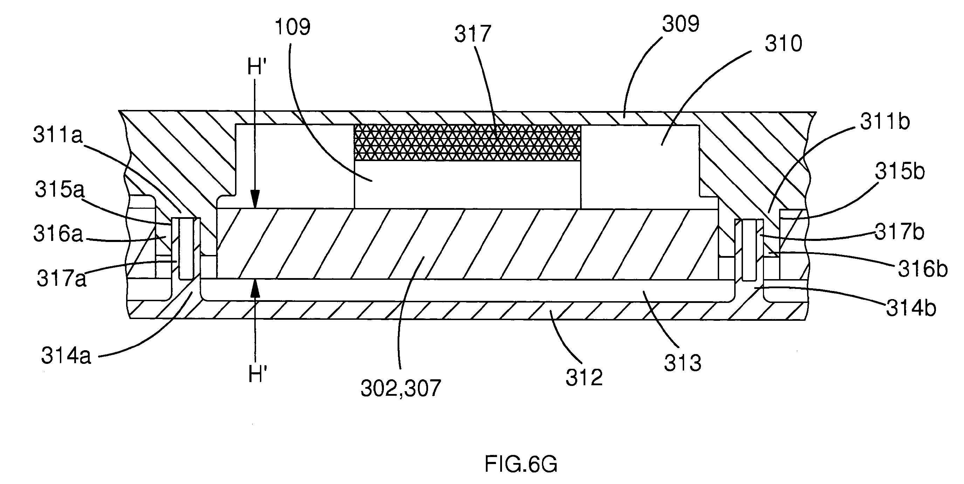

The outer surface of each of the top cap 309 and the bottom cap 312 is rounded to facilitate the comfort of an operator manipulating the body 302 of the hand wrench 300. The top cap 309 has four dowels 311a, 311b, 311c, 311d extending from its inner surface and protruding towards a respective dowel 314a, 314b, 314c, 314d extending from the inner surface of the bottom cap 312. The middle strip 307 has four holes 315a, 315b, 315c, 315d through the body 302. Since the holes 315a, 315b, 315c, 315d are in the middle strip 307, the transmission of torque along the body 302 of the hand wrench 300 is largely unaffected by the presence of the through-holes. Each through-hole 315a, 315b, 315c, 315d is aligned with a respective pair of dowels 311a, 314a; 311b, 314b; 311c, 314c; and 311d, 314d. Each pair of dowels is joined to secure the caps on the body 302 which is sandwiched between the top cap 309 and the bottom cap 312. The pairs of dowels may be joined by any suitable means such as snap-fit or with screws. As is shown in more detail in Figure 6G, each dowel 311 a, 311 b of the top cap 309 terminates with a ring 316a, 316b which receives a pin 317a, 317b protruding from the end of a respective dowel 314a, 314b of the bottom cap 312. An interference fit between the pins 317a, 317b and the rings 316a, 316b aligns the pairs of dowels 311a, 314a; 311b, 314b and secures the top cap 309 and the bottom cap 312 together. For additional security, the pins 317a, 317b may be glued to the rings 316a, 316b. A relatively small hand wrench may have only two holes 315a, 315b for two pairs of dowels 311a, 314a, 311a, 314b. However, most hand wrenches are large enough to have a multitude of through-holes and a corresponding number of pairs of dowels to secure the top and bottom caps along the length of the middle strip.

As mentioned above, the top cap 309 is configured to encapsulate the RFID tag 109 within the cavity 310. For additional protection, the top cap 309 may have an internal damping web 317 abutting against the RFID tag 109 to help hold the latter more securely. Alternatively, the damping web may be replaced or complemented by a layer of flexible cellular or elastomeric material 317. In order to facilitate transmission of signals to and from the RFID tag 109, the top cap 309 and the bottom cap 312 comprise a nylon or other plastic-type material that is transparent or partially-transparent to radio frequency energy. The top cap 309, the bottom cap 312, the RFID tag 109 and the elastomeric material 317 may be fitted to a new hand wrench 300, or retro-fitted to a preexisting hand wrench 300, with the only modification being the holes 315a, 315b drilled through the middle strip 307.

Referring to Figures 6D and 6F, there is shown the top cap 309 with four dowels 311a, 311b, 311c, 311d protruding downward. The distance W2 between the pair of dowels 311 b, 311 d on one side of a centre line CL through the top cap 309 is slightly less than the distance W3 between the pair of dowels 311a, 311c on the other side of the centre line CL through the top cap 309. The holes 315a, 315b, 315c, 315d in the middle strip 307 of the body 302 and the dowels 314a, 314b, 314c, 314d of the bottom cap 312 are aligned with their respective dowel 311a, 311b, 311c, 311 d of the top cap 309. Accordingly, the distance W2 is between the holes 315b and 315d and between dowels 314b and 314d. The distance W3 is between the holes 315a and 315c and between the dowels 314a and 314c. The difference between distances W2 and W3 ensures that the holes and the dowels do not align unless the top cap 309 and the bottom cap 312 are orientated about the centre line CL in the correct rotational sense during assembly. The assembly method is simple and therefore more cost-effective than previously used methods, for example using complex milling operations to provide undercuts in the outer strips 305, 305 to retain the top cap 309 on the body 302.

The material of the caps 309, 312 may be fluorescent. The preferred colour is yellow + fluorescent pigment. This facilitates tracking the hand tool 300 by sight, especially with the help of a flashlight which emits ultra-violet light. This may be beneficial when tracking a misplaced hand tool in a complex environment with multiple parts, such as in an aero-engine or a railway locomotive.

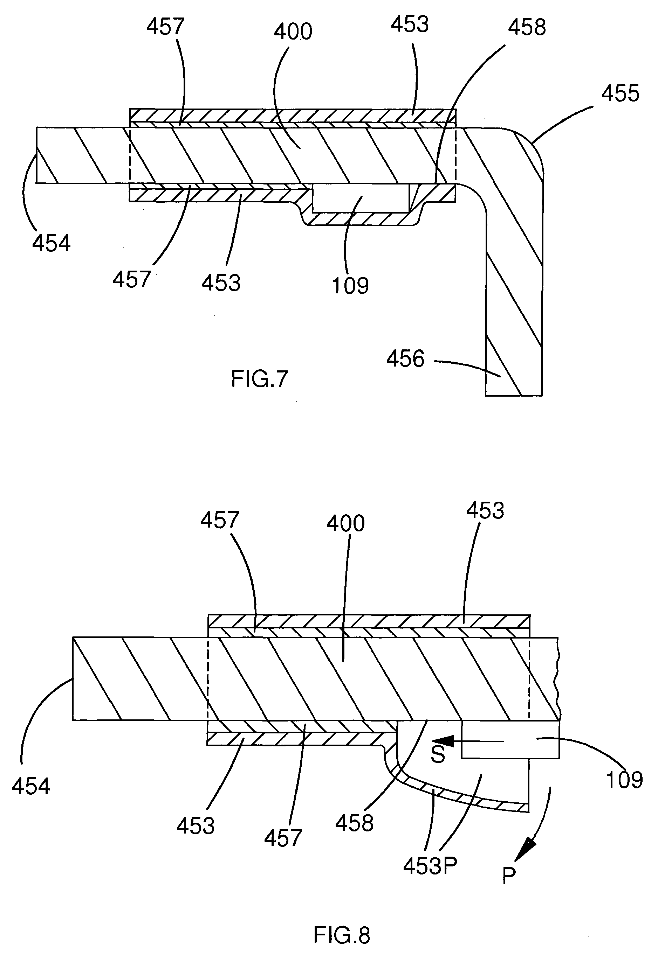

In a further aspect of the present invention, Figures 7 to 9 show a hand tool with an electronic identification device such as an RFID tag, wherein the tool does not have enough space or material to attach a pair of caps like those discussed above in relation to a hand tool with a flat handle. The hand tool may be a hex key, pair of pliers, or a small diameter hand wrench, for example. The RFID tag is attached to a face of the tool and coated with a layer of PVC to protect the RFID tag from corrosive chemicals and cushion it from impacts.

Referring to Figures 7 and 8, there is shown a hex key 400 made of metal with a RFID tag 109 attached to one of its six flat faces. The longer of the two limbs of the hex key 400 is coated about its circumference with a layer 453 of PVC. The layer 453 of PVC extends from near an end 454 of the longer limb of the hex key to near the elbow 455 of the hex key. The RFID tag 109 is encapsulated between the hex key 400 and the layer 453 of PVC. The layer 453 of PVC helps to protect the RFID tag 109 from impacts. The layer 453 of PVC may be gripped by an operator manipulating the hex key 400. An end 456 of the shorter limb of the hex key 400 is used to engage a hex recess in a cap-head screw, for example. The PVC is elastic and it is transparent or partially-transparent to radio frequency energy, in order to facilitate the transmission of signals to and from the RFID tag 109. The RFID tag 109 is of the type which is designed to contact a metal object. Advantageously, contact with the metal hex key 400 has the effect of amplifying emission, and reception, of the signal to, and from, the RFID tag 109. The amount of amplification depends on the size of the metal object which acts as an antenna.

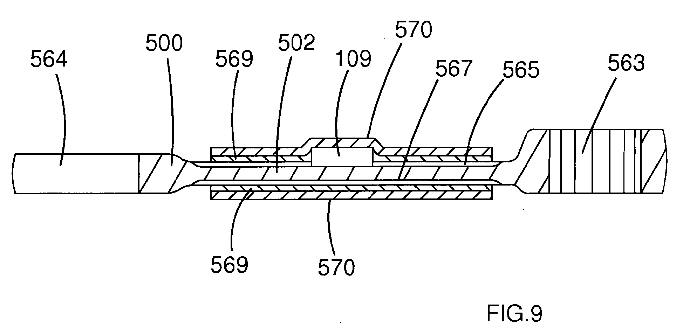

Referring to Figure 9, there is shown a hand tool in the form of hand wrench 500 with an elongate body 502 made of metal. The hand tool 500 shown is a hand wrench with a relatively small body 502. The hand wrench 500 comprises a ring socket 563 at a first end and an open socket 564 at a second end opposite to the first end. The body 502 has a width that is too small to drill holes and support protective caps like those described above in relation to hand wrench 300. The body 502 acts as the flat handle of the hand wrench 500 which is grasped and manipulated by an operator when tightening or loosening a nut or a bolt.

The body 502 has an outer strip 565 extending along each outer edge of the body and an elongate middle strip 567 between the outer edges and between the sockets 563, 564. The middle strip 567 is recessed within the body 2. When a nut or a bolt is being loosened or tightened, the middle strip 567 is largely mechanically neutral because most of the torque is transmitted to the socket 563, 564 via the outer strips 565.

The hand wrench 500 comprises an electronic identification device 109 in the form of an RFID tag or another type of electronic identification device 109 capable of emitting an identifying signal. The hand wrench comprises a layer 570 of PVC. The RFID tag 109 is encapsulated between the middle strip 567 of the body 502 and the layer 570 of PVC. The layer 570 of PVC protects the RFID tag 109. The PVC is elastic and it is transparent or partially-transparent to radio frequency energy, in order to facilitate the transmission of signals to the RFID tag 109. The RFID tag 109 is of the type which is designed to contact a metal object. The RFID tag 109 is secured to the body 502 at the middle strip 567 approximately midway between the ring socket 563 and the open socket 564. The RFID tag 109 may be secured by any suitable means, such as adhesive. The RFID tag 109 emits an identifying signal that is capable of being received by an appropriate reader (not shown). The identifying signal may include data that uniquely corresponds to the RFID tag 109, thereby facilitating the identification of the hand tool 500 to which the RFID tag 109 is attached. The RFID tag 109 may be active, semi-active, or passive and may or may not include storage memory. Advantageously, contact with the metal body 502 has the effect of amplifying emission, and reception, of the signal to, and from, the RFID tag 109 depending on the size of the metal object which acts as an antenna.

The process for applying a PVC layer to either of the hand tools 400, 500 shown in Figures 7 to 9 is as follows.

Firstly, the hand tool's metal body 400,502 is cleaned and degreased in an ultra sound machine, by sand-blasting or with chlorinated solvents. Second, a preliminary coating of fixing primer 457,569 is applied only to areas of the metal body to be coated with a layer 453,570 of PVC on the finished tool. Third, the fixing primer 457,569 is dried in ambient air for at least five minutes. Fourth, the fixing primer 457,569 is activated by heating the hand tool 400,500 for at least five minutes at a temperature greater than 100°C. The fixing primer permits the adherence of PVC to non-porous substrates like the metal body 400,502. Fifth, the hand tool 400,500 is dipped in liquid PVC (preferred colour: yellow + fluorescent pigment). Sixth, using an automated machine, the hand tool 400,500 is gently lifted at a rate which ensures a well-attached and even layer of PVC. Seventh, the layer 453,570 of PVC is heated to at least 100°C for up to fifteen minutes depending on the geometry and thermal inertia of the hand tool's body 400,502. The fifth, sixth and seventh steps may be repeated to attain the required thickness of the layer 453,570 of PVC and/or good density of colour. Eighth, the hand tools 400,500 are cooled in a blower machine to ensure homogeneity of the layer of PVC. Ninth, the layer 453,570 of PVC is cut and removed from areas of the metal body 400,502 without fixing primer and which are not a working area, or adjacent to a working area, of the hand tool 400, 500. The hand tool is finished and ready for identification, marking and packaging.

Referring to the hand wrench 500 shown in Figure 9, the RFID tag 109 is one which is designed to withstand temperatures of greater than 100°C, for example a Xarafy^{™} DASH-XS-HT ceramic RFID tag. The RFID tag 109 is attached to the hand wrench's metal body 502 before the second step of the above process. The layer 570 of PVC is applied over the RFID tag 109.

Referring to the hex wrench 400 shown in Figures 7 & 8, a strip of a flat side of the hex wrench's metal body 400 is spared the preliminary coating of fixing primer at the second step of the above process even though it will remain covered in the layer 453 of PVC after the ninth step of the above process. The fixing primer-free strip 458 extends from where the fixing primer begins on the other five flat sides of the hex wrench's metal body 400 to where the RFID tag 109 is located. The layer 453 of PVC is resilient and a pocket 453P of the layer 453 of PVC adjacent the primer-free strip 458 may be pulled away from the hex wrench's metal body 400 in the direction of arrow P because it is not fixed by the fixing primer. When the pocket 453P of the 453 layer of PVC is pulled back, the RFID tag may be slipped underneath in the direction of arrow S and left where it is shown in Figure 8. The pocket 453P of the 453 layer of PVC is released and relaxes to secure the RFID tag 109 against the hex wrench's metal body 400. Tension in the layer of PVC is sufficient to hold the RFID tag firmly to the hex wrench's metal body 400.

Important aspects of the PVC coating process and the hand tools:
Irrespective of the presence of an RFID tag 109, which is an optional feature of the hex key 400 and the hand wrench 500, the layer 453, 570 of PVC has a fluorescent pigment. This facilitates tracking the hand tool by sight, especially with the help of a flashlight which emits ultra-violet light. This may be beneficial when tracking a misplaced hand tool in a complex environment with multiple parts, such as in an aero-engine or a railway locomotive. The aero-engine maintenance sector is especially sensitive to what it calls "Foreign Object Damage" (FOD) and a RFID-tagged fluorescent tool contributes to minimizing FOD. Anti-FOD characteristics are maintained even if the fluorescent element is accidentally cut with a blade or subjected to abrasion: the use of the fixing primer renders the layer of PVC solid with the metal substrate. This solution is shock-resistant: the fluorescent layer of PVC does not easily break or flake off.

The PVC coating does not change the technical characteristics of the hand tools (no drilling, milling or any other modification to the principle geometry of the hand tools in order to have a fluorescent part) and it is an integrated function of the hand tools. The layer of PVC protects the metal body and the RFID tag from chemical products. The layer of PVC has a soft touch which is tactile, insulates from cold metal, and improves the ergonomics of the part of the hand tool manipulated by an operator. The layer of PVC does not alter the hand tool's ability to be cleaned. It provides an inexpensive way of adding fluorescent colour to consumable tools such as bits and sockets.

## Claims

1. A hand tool (300) comprising:
an elongate body (302);
a nut turning means (303) at a first end of the body (302); and
a top cap (309) and a bottom cap (312) disposed on opposite sides of the body (302);
wherein the top cap (309) and the bottom cap (312) are secured to the body (302) by an interconnection (311 a,314a; 311 b,314b; 311 c,314c; 311d,314d) between the top cap (309) and the bottom cap (312) which traverses at least one hole (315a,315b,315c,315d) formed through the body and wherein the top cap (309), the bottom cap (312) and the body (302) combine to form a gripping portion suitable for use as a handle,
wherein the interconnection comprises at least one pair of dowels (311a,314a; 311 b,314b; 311 c,314c; 311 d,314d), wherein one of each pair of dowels (311 a,311 b,311 c,311 d) protrudes from the top cap (309) to engage the other of each pair of dowels (314a,314b,314c,314d) which protrudes from the bottom cap (312), and wherein the or each pair of dowels traverses a respective hole (315a,315b,315c,315d) through the body,
**characterised in that** the hand tool comprises an electronic identification device (109),
wherein the electronic identification device (109) is encapsulated in a cavity (310) defined by the body (302) and at least the top cap (309),
wherein at least the top cap (309) comprises a material which is at least partially-transparent to radio frequency energy in order to facilitate transmission of signals to and from the electronic identification device (109),
wherein the interconnection comprises a multitude of pairs of dowels (311a,314a; 311b,314b; 311c,314c; 311d,314d) and wherein different widths (W2, W3) between adjacent pairs of dowels preclude rotational symmetry of the top cap (309) and the bottom cap (312) about their midpoint (CL).

2. A hand tool as claimed in claim 1, wherein the body (302) comprises a first elongate outer strip (305), a second elongate outer strip (306) and a middle strip (307), wherein the first outer strip (305) and the second outer strip (306) extend along the outer edges of the body (302) between the first end and the second end of the tool (302), wherein the middle strip (307) is disposed between the first and second outer strips (305,306), wherein the middle strip (307) is recessed in relation to the first and second outer strips (305,306) such that a height (H') of the middle strip (7) is less than a height (H) of the first and second outer strips (305,306) and wherein a top cap (309) and a bottom cap (312) disposed on opposite sides of the middle strip (307)

3. A hand tool as claimed in either one of claim 1 or 2wherein engagement between the or each pair of dowels (311 a,314a; 311 b,314b; 311 c,314c; 311 d,314d) is provided by a snap fit or an interference fit.

4. A hand tool (300) as claimed in any one of claims 1 to 3, wherein engagement between the or each pair of dowels (311 a, 314a; 311 b,314b; 311 c,314c; 311d,314d) is provided by a male joint (317a, 317b, 317c, 317d) disposed on one of each dowel pair and a female joint (316a, 316b, 316c, 316d) disposed on the other of each dowel pair.

5. A hand tool as claimed in any one of the previous claims, wherein the or each pair of dowels (311 a,314a; 311 b,314b; 311 c,314c; 311 d,314d) are glued together.

6. A hand tool (300) as claimed in any one of the preceding claims, wherein the exterior of each of the top cap (309) and the bottom cap (312) is rounded.

7. A hand tool (300) as claimed in any one of the previous claims wherein the electronic identification device (109) is secured to the body.

8. A hand tool (300) as claimed in any one of the preceding claims, wherein the electronic identification device (109) is held securely within the cavity (310) by an internal damping web (317) or a layer of flexible cellular or elastomeric material (317) abutting against the electronic identification tag (109).

9. A hand tool (300) as claimed in any one of the preceding claims, wherein the bottom cap (312) comprises the same material as the top cap (309).

10. A hand tool (300) as claimed in any one of the preceding wherein the material of the top cap (9) and/or the bottom cap (12) comprise a fluorescent pigment.

11. A hand tool (300) as claimed in any one of the preceding claims, wherein the nut turning means (303) comprises a ring socket, an open socket, an adjustable socket, a ratcheted ring socket or a wrench drive spindle.

12. A hand tool (300) as claimed in any one of the previous claims, wherein the hand tool comprises a second nut turning means (304) at a second end of the body (302) opposite to the first end of the body.

13. A hand tool as claimed in claim 12, wherein the second nut turning means (304) comprises a ring socket, an open socket, an adjustable socket or a ratcheted ring socket.

## Patentansprüche

1. Ein Handwerkzeug (300), aufweisend:
einen länglichen Körper (302);
ein Mutterdrehungsmittel (303) an einem ersten Ende des Körpers (302); und
einen oberen Deckel (309) und einen unteren Deckel (312), die auf gegenüberliegenden Seiten des Körpers (302) angeordnet sind;
wobei der obere Deckel (309) und der untere Deckel (312) durch eine Verbindung (311a, 314a; 311b, 314b; 311c, 314c; 311d, 314d) zwischen dem oberen Deckel (309) und dem unteren Deckel (312), die zumindest ein durch den Körper ausgebildetes Loch (315a, 315b, 315c, 315d) durchläuft, an dem Körper (302) gesichert sind und wobei sich der obere Deckel (309), der untere Deckel (312) und der Körper (302) kombinieren, um einen Greifabschnitt auszubilden, der zur Verwendung als ein Handgriff geeignet ist,
wobei die Verbindung zumindest ein Paar von Dübeln (311a, 314a; 311 b, 314b; 311c, 314c; 311 d, 314d) aufweist, wobei einer von jedem Paar von Dübeln (311a, 311b, 311c, 311d) von dem oberen Deckel (309) absteht, um mit dem anderen von jedem Paar von Dübeln (314a, 314b, 314c, 314d), der von dem unteren Deckel (312) absteht, in Eingriff zu kommen, und wobei das oder jedes Paar von Dübeln ein entsprechendes Loch (315a, 315b, 315c, 315d) durch den Körper durchläuft,
**dadurch gekennzeichnet, dass** das Handwerkzeug eine elektronische Identifizierungsvorrichtung (109) aufweist,
wobei die elektronische Identifizierungsvorrichtung (109) in einem Hohlraum (310), der durch den Körper (302) und zumindest den oberen Deckel (309) definiert ist, eingekapselt ist,
wobei zumindest der obere Deckel (309) ein Material aufweist, welches zumindest zum Teil durchlässig für Hochfrequenzenergie ist, um eine Übertragung von Signalen zu und von der elektronischen Identifizierungsvorrichtung (109) zu ermöglichen,
wobei die Verbindung eine Vielzahl von Paaren von Dübeln (311a, 314a; 311b, 314b; 311c, 314c; 311d, 314d) aufweist und wobei verschiedene Breiten (W2, W3) zwischen benachbarten Paaren von Dübeln eine Rotationssymmetrie von dem oberen Deckel (309) und dem unteren Deckel (312) um ihren Mittelpunkt (CL) verhindern.

2. Ein Handwerkzeug wie in Anspruch 1 beansprucht, wobei der Körper (302) einen ersten länglichen äußeren Streifen (305), einen zweiten länglichen äußeren Streifen (306) und einen mittleren Streifen (307) aufweist, wobei sich der erste äußere Streifen (305) und der zweite äußere Streifen (306) entlang der äußeren Ränder des Körpers (302) zwischen dem ersten Ende und dem zweiten Ende des Werkzeugs (302) erstrecken, wobei der mittlere Streifen (307) zwischen den ersten und zweiten äußeren Streifen (305, 306) angeordnet ist, wobei der mittlere Streifen (307) in Bezug auf die ersten und zweiten äußeren Streifen (305, 306) zurückgesetzt ist, so dass eine Höhe (H') des mittleren Streifens (7) geringer als eine Höhe (H) der ersten und zweiten äußeren Streifen (305, 306) ist, und wobei ein oberer Deckel (309) und ein unterer Deckel (312) auf gegenüberliegenden Seiten des mittleren Streifens (307) angeordnet sind.

3. Ein Handwerkzeug wie in einem der Ansprüche 1 oder 2 beansprucht, wobei ein Eingriff zwischen dem oder jedem Paar von Dübeln (311a, 314a; 311b, 314b; 311c, 314c; 311d, 314d) durch einen Schnappverschluss oder einen Presssitz bereitgestellt ist.

4. Ein Handwerkzeug (300) wie in einem der Ansprüche 1 bis 3 beansprucht, wobei ein Eingriff zwischen dem oder jedem Paar von Dübeln (311a, 314a; 311b, 314b; 311c, 314c; 311d, 314d) durch ein männliches Anschlussstück (317a, 317b, 317c, 317d), das an einem von jedem Dübelpaar angeordnet ist, und ein weibliches Anschlussstück (316a, 316b, 316c, 316d), das an dem anderen von jedem Dübelpaar angeordnet ist, bereitgestellt ist.

5. Ein Handwerkzeug wie in einem der vorangegangenen Ansprüche beansprucht, wobei das oder jedes Paar von Dübeln (311a, 314a; 311b, 314b; 311c, 314c; 311 d, 314d) zusammen geklebt sind.

6. Ein Handwerkzeug (300) wie in einem der vorangegangenen Ansprüche beansprucht, wobei der Außenbereich von jedem von dem oberen Deckel (309) und dem unteren Deckel (312) abgerundet ist.

7. Ein Handwerkzeug (300) wie in einem der vorangegangenen Ansprüche beansprucht, wobei die elektronische Identifizierungsvorrichtung (109) an dem Körper gesichert ist.

8. Ein Handwerkzeug (300) wie in einem der vorangegangenen Ansprüche beansprucht, wobei die elektronische Identifizierungsvorrichtung (109) sicher innerhalb des Hohlraums (310) gehalten ist, indem ein innerliches Dämpfungsgewebe (317) oder eine Schicht aus einem flexiblen zellulären oder elastomeren Material (317) an der elektronischen Identifizierungsmarke (109) anliegt.

9. Ein Handwerkzeug (300) wie in einem der vorangegangenen Ansprüche beansprucht, wobei der untere Deckel (312) das selbe Material wie der obere Deckel (309) aufweist.

10. Ein Handwerkzeug (300) wie in einem der vorangegangenen Ansprüche beansprucht, wobei das Material des oberen Deckels (9) und/oder des unteren Deckels (12) ein fluoreszierendes Pigment aufweist.

11. Ein Handwerkzeug (300) wie in einem der vorangegangenen Ansprüche beansprucht, wobei das Mutterdrehungsmittel (303) eine Ringaufnahme, eine offene Aufnahme, eine einstellbare Aufnahme, eine Ratschenringaufnahme oder eine Schlüsselantriebsspindel aufweist.

12. Ein Handwerkzeug (300) wie in einem der vorangegangenen Ansprüche beansprucht, wobei das Handwerkzeug ein zweites Mutterdrehungsmittel (304) an einem zweiten Ende des Körpers (302) gegenüber dem ersten Ende des Körpers aufweist.

13. Ein Handwerkzeug wie in Anspruch 12 beansprucht, wobei das zweite Mutterdrehungsmittel (304) eine Ringaufnahme, eine offene Aufnahme, eine einstellbare Aufnahme oder eine Ratschenringaufnahme aufweist.

## Revendications

1. Outil manuel (300) comprenant :
un corps allongé (302) ;
un moyen de rotation d'écrou (303) à une première extrémité du corps (302) ; et
un chapeau supérieur (309) et un chapeau inférieur (312) disposés sur les côtés opposés du corps (302) ;
dans lequel le chapeau supérieur (309) et le chapeau inférieur (312) sont fixés au corps (302) par une interconnexion (311a, 314a ; 311b, 314b ; 311c, 314c ; 311d, 314d) entre le chapeau supérieur (309) et le chapeau inférieur (312), qui traverse au moins un trou (315a, 315b, 315c, 315d) formé à travers le corps et dans lequel le chapeau supérieur (309), le chapeau inférieur (312) et le corps (302) se combinent pour former une partie de préhension convenant à un usage comme poignée,
dans lequel l'interconnexion comprend au moins une paire de chevilles (311a, 314a ; 311b, 314b ; 311c, 314c ; 311d, 314d), dans lequel l'une de chaque paire de chevilles (311a, 311b, 311c, 311d) fait saillie du chapeau supérieur (309) pour s'engager sur l'autre de chaque paire de chevilles (314a, 314b, 314c, 314d) qui fait saillie du chapeau inférieur (312) et dans lequel la ou chaque paire de chevilles traverse un trou respectif (315a, 315b, 315c, 315d) passant à travers le corps,
**caractérisé en ce que** l'outil manuel comprend un dispositif d'identification électronique (109),
dans lequel le dispositif d'identification électronique (109) est encapsulé dans une cavité (310) définie par le corps (302) et au moins le chapeau supérieur (309),
dans lequel au moins le chapeau supérieur (309) comprend un matériau qui est au moins partiellement transparent à une énergie de fréquence radio afin de faciliter la transmission de signaux vers le dispositif d'identification électronique (109) et à partir de celui-ci,
dans lequel l'interconnexion comprend une multitude de paires de chevilles (311a, 314a ; 311b, 314b ; 311c, 314c ; 311d, 314d) et dans lequel différentes largeurs (W2, W3) entre des paires adjacentes de chevilles empêchent une symétrie de rotation du chapeau supérieur (309) et du chapeau inférieur (312) autour de leur point central (CL).

2. Outil manuel selon la revendication 1, dans lequel le corps (302) comprend une première bande allongée externe (305), une seconde bande allongée externe (306) et une bande centrale (307), dans lequel la première bande externe (305) et la seconde bande externe (306) s'étendent le long des bords externes du corps (302) entre la première extrémité et la seconde extrémité de l'outil (302), dans lequel la bande centrale (307) est disposée entre la première et la seconde bande externe (305, 306), dans lequel la bande centrale (307) est dégagée par rapport à la première et à la seconde bande externe (305, 306) de sorte que la hauteur (H') de la bande centrale (7) soit inférieure à la hauteur (H) de la première et de la seconde bande externe (305, 306) et dans lequel un chapeau supérieur (309) et un chapeau inférieur (312) sont disposés sur les côtés opposés de la bande centrale (307).

3. Outil manuel selon l'une quelconque des revendications 1 ou 2, dans lequel l'engagement entre la ou chaque paire de chevilles (311a, 314a ; 311b, 314b ; 311c, 314c ; 311d, 314d) est ménagé par une jonction d'encliquetage ou une jonction d'interférence.

4. Outil manuel (300) selon l'une quelconque des revendications 1 à 3, dans lequel l'engagement entre la ou chaque paire de chevilles (311a, 314a ; 311b, 314b ; 311c, 314c ; 311d, 314d) est fourni par un joint mâle (317a, 317b, 317c, 317d) disposé sur l'une de chaque paire de chevilles et un joint femelle (316a, 316b, 316c, 316d) disposé sur l'autre de chaque paire de chevilles.

5. Outil manuel selon l'une quelconque des revendications précédentes, dans lequel la ou chaque paire de chevilles (311a, 314a ; 311b, 314b ; 311c, 314c ; 311d, 314d) est collée mutuellement.

6. Outil manuel (300) selon l'une quelconque des revendications précédentes, dans lequel l'extérieur de chacun du chapeau supérieur (309) et du chapeau inférieur (312) est arrondi.

7. Outil manuel (300) selon l'une quelconque des revendications précédentes, dans lequel le dispositif d'identification électronique (109) est fixé au corps.

8. Outil manuel (300) selon l'une quelconque des revendications précédentes, dans lequel le dispositif d'identification électronique (109) est maintenu solidement dans la cavité (310) par une âme d'amortissement interne (317) ou une couche d'un matériau cellulaire ou élastomère flexible (317) s'appuyant contre l'étiquette d'identification électronique (109).

9. Outil manuel (300) selon l'une quelconque des revendications précédentes, dans lequel le chapeau inférieur (312) comprend le même matériau que le chapeau supérieur (309).

10. Outil manuel (300) selon l'une quelconque des revendications précédentes, dans lequel le matériau du chapeau supérieur (9) et/ou du chapeau inférieur (12) comprend un pigment fluorescent.

11. Outil manuel (300) selon l'une quelconque des revendications précédentes, dans lequel le moyen de rotation d'écrou (303) comprend une douille annulaire, une douille ouverte, une douille ajustable, une douille annulaire à cliquet ou une broche d'entraînement à clé.

12. Outil manuel (300) selon l'une quelconque des revendications précédentes, dans lequel l'outil manuel comprend un second moyen de rotation d'écrou (304) à une seconde extrémité du corps (302) opposée à la première extrémité du corps.

13. Outil manuel selon la revendication 12, dans lequel le second moyen de rotation d'écrou (304) comprend une douille annulaire, une douille ouverte, une douille ajustable ou une douille annulaire à cliquet.
